# EUROPÄISCHE PATENTANMELDUNG

(11) **EP 1 044 610 A1**
(43) Veröffentlichungstag der Anmeldung: **18.10.2000**
(21) Anmeldenummer: 00107197.6
(22) Anmeldetag: 12.04.2000
(51) Int. Cl.: A01N 59/16, A01N 25/08

(54) **Zusammensetzungen mit Silber auf Zinksilikat-Trägern und antibiotischen Eigenschaften**

(30) Priorität: 13.04.1999 DE 19916562
(71) Anmelder: BASF AKTIENGESELLSCHAFT, 67056 Ludwigshafen (DE)
(72) Erfinder: Breitscheidel, Boris, Dr., 67117 Limburgerhof (DE); Hibst, Hartmut, Prof. Dr., 69198 Schriesheim (DE)
(74) Vertreter: Isenbruck, Günter, Dr.

(57) **Zusammenfassung**

Die Erfindung betrifft eine Zusammensetzung, enthaltend Silber auf einem Zinksilikat-Träger der allgemeinen Formel (I)

ZnₐSi_{c}O_{a+2c-0,5e} (OH)ₑ · fH₂O (I)

mit
e = 0 - (2a + 4c),
a/c = 1 - 3,5,
f/a = 0 - 25
mit bakteriziden und/oder fungiziden Eigenschaften und ein Verfahren zur Herstellung der Zusammensetzung.

Besonders geeignet ist die Zusammensetzung als Zusatzstoff zur Ausrüstung von Kunststoffen oder Kunststoffasern gegen das Wachstum von Mikroorganismen an ihrer Oberfläche.

## Beschreibung

Die Erfindung betrifft Zusammensetzungen mit bioziden Eigenschaften, die Silber auf einem Zinksilikat-Träger enthalten, ein Verfahren zur Herstellung der Zusammensetzungen, deren Verwendung zur Ausrüstung von Kunststoffen gegen oberflächliches Wachstum von Mikroorganismen sowie antibiotische Kunststoffzusammensetzungen.

Das Wachstum von Mikroorganismen in bewohnten Räumen und Teppichen und anderen Textilien wird nicht nur für die Weiterverbreitung von ansteckenden Krankheiten (insbesondere in Krankenhäusern), sondern auch für das 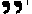 Sick Building Syndrome", die 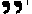 Building Related Illness" sowie für die Bildung von modrigen Gerüchen verantwortlich gemacht.

Es ist seit langem bekannt, daß Ag-, Cu- und Zn-Ionen desinfizierende Eigenschaften haben.

Aus den EP-A-0 275 047, 0 322 814, 0 288 063 und 0 270 129 ist die Verwendung von antibiotischen Zeolithen als Zusatz zu Kunststoffen und Kunststoffasern bekannt, um an deren Oberfläche das Wachstum von Mikroorganismen zu verhindern. Dabei wird Silber oder ein anderes antibiotisch wirksames Metallion wie Cu, Zn, Hg, Sn, Pb, Bi, Cd, Cr oder Tl in ionischer Form an Ionenaustauscher gebunden. Als Ionenaustauscher wurden Zeolithe (A-, X-, Y-, T-Zeolithe), Mordenite, Sodalithe, Analcim, Clinoptilolite oder Erionithe als auch amorphe Aluminiumsilikate beschrieben.

Aus Chem. Abstr. Vol 118, 75371 k ist die Verwendung von Ag, Cu, Zn, Ni, Pt, Sn, As, Pb, Cd und Cr enthaltenden Calciumphosphaten, insbesondere von Hydroxyapatiten, bekannt.

Aus J. Mater. Sci., 27(18), 5027-30 ist die Bindung von Ag⁺ an Tone, insbesondere an Montmorillonite, und aus JP-A 04 210 606 an Na₂Si₂O₅ bekannt. AgNO₃ auf SiO₂ wird in Chem. Abstr. Vol 115, 273442 k, AgCl/TiO₂ in WO-A 91/00011, AgCl auf Aluminiumsilikat in Chem. Abstr. Vol 108, 137657 n beschrieben.

Insbesondere für die Anwendung im Textilfaserbereich ist es wichtig, daß das Silber beim Waschen nicht ausgelaugt wird und sich nicht durch die Einwirkung von Sonnenlicht verfärbt. Ionisch gebundenes Silber wird jedoch bei der Einwirkung von Laugen als schwarzes AgO ausgefällt, was zu einer Verfärbung der Produkte führt. Kolloidales metallisches Silber hat ebenfalls bakterizide Eigenschaften (Kirk-Othmer, Encyclopedia of Chemical Technology, 1979, 805 bis 807), jedoch eine von vornherein dunkle Farbe, so daß es für die Dotierung heller Fasern (insbesondere von Teppichfasern) nicht in Frage kommt.

Der vorliegenden Erfindung liegt die Aufgabe zugrunde, den zuvorgenannten Nachteilen abzuhelfen. Insbesondere ist es Aufgabe der Erfindung, ein antibiotisches Material mit hoher Wirksamkeit bereitzustellen, das nicht nur bakterizide, sondern auch fungizide Eigenschaften aufweist.

Die Aufgabe wird gelöst durch eine Zusammensetzung, enthaltend Silber auf einem Zinksilikat-Träger der allgemeinen Formel (I)

ZnₐSi_{c}O_{a+2c-0,5e}(OH)ₑ · fH₂O (I)

mit
e = 0 - (2a + 4c)
a/c = 1 - 3,5
f/a = 0 - 25

Das erfindungsgemäß als Träger eingesetzte Zinksilikat kann röntgenamorph oder kristallin sein.

In einer bevorzugten Ausführungsform der Erfindung enthält die Zusammensetzung Silber auf einem röntgenamorphen Zinksilikat-Träger der allgemeinen Formel (I). Der röntgenamorphe Zinksilikat-Träger läßt sich auch physikalisch charakterisieren. Er weist bei Anwendung von Cu-Kα₁ Strahlung (λ = 1,5406 Å) im Pulverröntgenbeugungsdiagramm zwei breite Banden bei 2θ = 31 ± 5° und bei 2θ = 61 ± 7° auf.

In einer weiteren bevorzugten Ausführungsform der Erfindung wird als Zinksilikat-Träger kristalliner Hemimorphit der allgemeinen Formel (II)

Zn₄Si₂O₇(OH)_{2-2y}O_{y} · xH₂O (II)

mit
x = 0 ― 1,
y = 0 - 1
eingesetzt.

Die erfindungsgemäßen Zusammensetzungen enthalten Silber im allgemeinen in Mengen von 0,001 bis 30 Gew.-%, bevorzugt 0,01 bis 10 Gew.-%, besonders bevorzugt 0,1 bis 5 Gew.-%, jeweils bezogen auf das Gesamtgewicht der Zusammensetzung, auf dem röntgenamorphen bzw. kristallinen Zinksilikat-Träger. Die erfindungsgemäßen Zusammensetzungen enthalten Silber als kolloidales Silber mit einem mittleren Teilchendurchmesser der Silberpartikel von im allgemeinen 1 bis 1000 nm, bevorzugt 1 bis 500 nm, besonders bevorzugt 5 bis 150 nm.

Die erfindungsgemäßen Zusammensetzungen weisen neben bakteriziden Eigenschaften auch fungizide Eigenschaften auf. So beträgt bei Prüfung der bakteriziden und fungiziden Wirkung nach der AATCC-Testmethode 147-1988 die Grenzkonzentration in einer Agar-Platte, bei der das Wachstum der Bakterien Klebsiella pneumoniae und Staphylococcus aureus unterdrückt wird, im Fall der röntgenamorphen Zinksilikat-Träger im allgemeinen kleiner 10000 ppm, bevorzugt kleiner 5000 ppm, besonders bevorzugt kleiner 1000 ppm und speziell bevorzugt sogar kleiner 500 ppm. Unter Einsatz von kristallinem Hemimorphit als Träger ist diese Grenzkonzentration im allgemeinen kleiner 100000, bevorzugt Meiner 50000. Die Grenzkonzentration, bei der das Wachstum der Pilze Cladosporium herbarum und Alternaria alternata unterdrückt wird, ist im Fall des röntgenamorphen Zinksilikat-Trägers im allgemeinen kleiner 50000 ppm, bevorzugt kleiner 10000 ppm, besonders bevorzugt kleiner 5000 ppm und im Falle des kristallinen Hemimorphits als Träger im allgemeinen kleiner 100000 ppm, bevorzugt kleiner 50000 ppm. Wegen der circa um einen Faktor 10 höheren Wirksamkeit sind Zusammensetzungen, die Silber auf einem röntgenamorphen Zinksilikat-Träger der allgemeinen Formel (I) enthalten, bevorzugt.

Gegenstand der Erfindung ist auch ein Verfahren zur Herstellung der erfindungsgemäßen Zusammensetzungen mit röntgenamorphem Zinksilikat-Träger durch
- Umsetzung einer wäßrigen Suspension eines Alkali- oder Erdalkalisilikats mit einer wäßrigen Lösung eines Zinksalzes, in den durch die allgemeine Formel (I) definierten Mengenverhältnissen bei einer Temperatur von 20°C bis zum Siedepunkt der sich ergebenden wäßrigen Suspension und einem pH-Wert von 4 bis 9,5 und einer Verweilzeit, bei der noch nicht in erheblichem Maße Kristallisation des Zinksilikats eintritt, Abtrennung des Zinksilikats und gegebenenfalls Waschen und Trocknen des Zinksilikats als Schritt a);
- Imprägnieren des Zinksilikats mit einem Silbersalz oder Silberkomplex, gefolgt von thermischer Zersetzung bei einer Temperatur oberhalb 200°C
   oder
   Imprägnieren des Zinksilikats mit einem Silbersalz oder Silberkomplex, gefolgt von chemischer Reduktion mit Wasserstoff oder einer reduzierenden organischen Verbindung
   oder
   Abscheiden des Silbers durch chemische Reduktion aus einer ein lösliches Silbersalz oder einen löslichen Silberkomplex enthaltenden Lösung auf dem Träger
   oder
   Aufdampfen des Silbers im Vakuum auf den Träger
   als Schritt b).

Ferner ist Gegenstand der vorliegenden Erfindung ein Verfahren zur Herstellung von Zusammensetzungen, enthaltend Silber auf kristallinem Hemimorphit der allgemeinen Formel (II) durch
- Bereitstellen von natürlich vorkommendem kristallinem Hemimorphit
   oder
   Umsetzung einer wäßrigen Suspension eines Alkali- oder Erdalkalisilikats mit einer wäßrigen Lösung eines Zinksalzes, wobei das Atomverhältnis Zn/Si circa 2 beträgt, bei Normaldruck und einer Temperatur von 50°C bis zum Siedepunkt der sich ergebenden wäßrigen Suspension oder unter hydrothermalen Bedingungen bei einer Temperatur vom Siedepunkt der sich ergebenden wäßrigen Suspension bis 250°C und einem pH-Wert von 4 bis 9,5 während einer Verweilzeit, bei der im erheblichen Maße Kristallisation des Zinksilikats eintritt, Abtrennung des kristallinen Hemimorphits, gegebenenfalls Waschen und Trocknen sowie gegebenenfalls einer thermischen Nachbehandlung des kristallinen Hemimorphits bei 70 bis 600°C
   als Schritt a);
- Aufbringen des Silbers auf den Träger durch Imprägnieren und thermische Zersetzung bzw. chemische Reduktion, Abscheiden oder Aufdampfen des Silbers gemäß einer der oben als Schritt b) beschriebenen Methoden.

Zur Herstellung des röntgenamorphen Zinksilikat-Trägers wird vorzugsweise gemäß dem in DE-A 197 26 670 beschriebenen verbesserten Herstellverfahren eine wäßrige Suspension eines Alkali- oder Erdalkalisilikats mit einer wäßrigen Lösung eines Zinksalzes bei Temperaturen von 20°C, bevorzugt 50°C bis zum Siedepunkt der sich ergebenden wäßrigen Suspension bei einem pH-Wert von 4 bis 9,5, bevorzugt bei einem pH-Wert in der Nähe des Neutralpunktes, und solchen Mengenverhältnissen von Alkalisilikat und Zinksalz, daß die Bedingungen der Formel (I) erfüllt werden und einer solchen Verweilzeit, daß noch nicht im erheblichen Maße Kristallisation des Zinksilikats eintritt, umgesetzt. Das so erhältliche, im wesentlichen röntgenamorphe Zinksilikat enthält Zn²⁺-, Si⁴⁺ und O²-Ionen; darüber hinaus kann die Verbindung OH⁻-Ionen und Hydratwasser enthalten. Das Zn/Si-Verhältnis beträgt 0,3 bis 5, bevorzugt 1 bis 2,7, besonders bevorzugt 2 bis 2,3 und ganz besonders bevorzugt 2. Im letzten Fall weist das röntgenamorphe Zinksilikat das Zn/Si-Verhältnis des kristallinen Hemimorphits (Zn₄Si₂O₇(OH)₂ · H₂O) auf. Das unter Anwendung der Cu-Kα₁-Strahlung (λ = 1,5406 Å) erhaltene Pulver-Röntgenbeugungsdiagramm des röntgenamorphen Zinksilikats weist im 2θ-Bereich von 10° bis 90° sehr breite Intensitätmaxima bei 2θ = 31° ± 5° und bei 2θ = 61° ± 7° auf. Das röntgenamorphe Zinksilikat fällt bei der Herstellung als Pulver an.

Kristalliner Hemimorphit wird bevorzugt gemäß der in DE-A 197 26 670 beschriebenen verbesserten Herstellungsmethode hergestellt. Demgemäß wird sowohl unter Normaldruck als auch unter hydrothermalen Bedingungen ein Alkali- oder Erdalkalisilikat, vorzugsweise Natriumsilikat, mit einem Zinksalz, insbesondere Zinknitrat und einer Base, wie Alkali- oder Erdalkalihydroxid, insbesondere Natriumhydroxid, in wäßriger Lösung bei pH-Werten von 4 bis 9,5, vorzugsweise 5,5 bis 8 und insbesondere in einem pH-Bereich um den Neutralpunkt, zum Beispiel bei pH 6 bis 7,5, im Falle der Umsetzung bei Normaldruck bei Temperaturen von 50 bis 100°C, insbesondere 70 bis 100°C, und im Falle der Umsetzung unter hydrothermalen Bedingungen bei Temperaturen von 100 bis 250°C, bevorzugt von 100 bis 200°C, umgesetzt.

Nach dieser Herstellungsmethode kann reiner Hemimorphit mit einem Zn/Si-Verhältnis von 2 synthetisiert werden. Es sind aber auch Hemimorphit-Präparate mit bis zu 25 % Unter- oder Überschuß an Zink, entsprechend einem Atomverhältnis Zn : Si von 1,6 : 2,5 zugänglich. Auch diese Hemimorphit-Präparate sind als Träger für die erfindungsgemäßen Zusammensetzungen geeignet, wobei solche, die keinen Zinküberschuß enthalten, bevorzugt sind. Letztere entsprechen der allgemeinen Formel (II).

Die Hemimorphit-Präparate fallen bei der Synthese als weißer kristalliner Niederschlag in Form einer wäßrigen Suspension an und müssen durch geeignete Maßnahmen, beispielsweise durch Filtration oder durch Zentrifugieren von der wäßrigen Lösung getrennt werden. Im Falle der Filtration wird der erhaltene Filterkuchen anschließend ausgewaschen, um ihn von löslichen Salzen zu befreien, und getrocknet. Die Trocknung kann bei Temperaturen bis 600°C erfolgen, wobei der bevorzugte Temperaturbereich 90 bis 450°C umfaßt. Thermogravimetrische Untersuchungen haben gezeigt, daß der auskristallisierte Hemimorphit der Zusammensetzung Zn₄Si₂O₇(OH)₂ · H₂O durch thermische Nachbehandlung im Temperaturbereich von etwa 100 bis 200°C unter Beibehaltung der Hemimorphit-Struktur zunehmend Anteile seines Kristallwassers verliert, wobei Hemimorphit-Präparate der Zusammensetzung Zn₄Si₂O₇(OH)₂ · xH₂O mit x < 1 resultieren, wobei x mit steigender Temperatur abnimmt. Trocknet man in einem höheren Temperaturbereich von etwa 200 bis 600°C, so werden zusätzlich, ebenfalls unter Beibehaltung der Hemimorphit-Struktur, die im Hemimorphit enthaltenen OH⁻-Ionen unter Abspaltung von H₂O in O²⁻-Ionen umgewandelt (2OH⁻ → H₂O + O²⁻), wobei Hemimorphit-Präparate der Zusammensetzung Zn₄Si₂O₇(OH)_{2-2y}O_{y} mit y = 0 bis 1 resultieren, wobei y mit steigender Temperatur zunimmt.

Die nach thermischer Nachbehandlung bei Temperaturen bis 600°C, bevorzugt bei 90 bis 450°C erhaltenen Hemimorphit-Präparate der Zusammensetzung Zn₄Si₂O₇(OH)_{2-2y}O_{y} · xH₂O mit x, y = 0 bis 1 bzw. die durch Trocknung bei etwa 100 bis 200°C erhaltenen Hemimorphit-Präparate der Zusammensetzung Zn₄Si₂O₇(OH)₂ · xH₂O mit x < 1 sind ebenso wie der Hemimorphit der Zusammensetzung Zn₄Si₂O₇(OH)₂ · H₂O als Zinksilikat-Träger für die erfindungsgemäßen Zusammensetzungen geeignet, wobei letzterer bevorzugt ist.

Das kolloidale Silber kann nach bekannten, in der Katalysatorherstellung üblichen Methoden aufgebracht werden. Dazu gehören die Tränkung (Imprägnierung) mit einem Silbersalz (beispielsweise Silbernitrat oder Silberacetat) oder einem Silberkomplex (beispielsweise Ag(NH₃)₂OH), gefolgt von thermischer Zersetzung oberhalb von 200°C oder einer chemischen Reduktion mit Wasserstoff oder einer organischen Verbindung (Formaldehyd). Alternativ dazu kann das Silber auch durch chemische Reduktion aus der flüssigen Phase abgeschieden oder im Vakuum aufgedampft werden.

Beispielsweise kann das kolloidale Silber durch Tränken des Trägers in wässerigen Silbersalzlösungen, durch Aufsprühen entsprechender Silbersalzlösungen auf den Träger oder durch andere geeignete Verfahren erreicht werden. Als Silbersalze zur Herstellung der Silbersalzlösungen eignen sich die Nitrate, Nitrosylnitrate, Halogenide, Carbonate, Carboxylate, Acetylacetonate, Chlorkomplexe, Nitrokomplexe oder Aminkomplexe, wobei die Nitrate, Nitrosylnitrate und Aminkomplexe bevorzugt sind.

Die mit der Silbersalzlösung beschichteten bzw. getränkten Träger werden anschließend getrocknet, wobei Temperaturen zwischen 100°C und 150°C bevorzugt sind. Wahlweise können diese Träger bei Temperaturen zwischen 200°C und 600°C, vorzugsweise 350°C bis 450°C kalziniert werden. Anschließend werden die beschichteten Träger durch Behandlung in einem Gasstrom, der freien Wasserstoff enthält, bei Temperaturen zwischen 30°C und 600°C, vorzugsweise zwischen 100°C und 450°C und insbesondere zwischen 100°C und 300°C aktiviert. Der Gasstrom besteht vorzugsweise aus 50-100 Vol.-% H₂ und 0-50 Vol.-% N₂.

Werden auf die Träger neben Silber andere antibiotisch aktive Metalle aufgetragen, können die Metallsalze bzw. Metallsalzlösungen gleichzeitig oder nacheinander aufgebracht werden. Erfolgt das Auftragen nacheinander, so kann der Träger nach jedem Auftragen bzw. Tränken bei Temperaturen zwischen 100°C und 150°C getrocknet werden und wahlweise bei Temperaturen zwischen 200°C und 600°C kalziniert werden. Dabei kann die Reihenfolge, in der die Metallsalzlösungen aufgetragen werden, beliebig gewählt werden.

Die Metallsalzlösung wird in einer solchen Menge auf den Träger aufgebracht, daß der Gehalt an Metall 0,01-30 Gew.-% vorzugsweise 0,01-10 Gew.-%, weiter bevorzugt 0,01-5 Gew.-% und insbesondere 0,3-1 Gew.-%, bezogen auf das Gesamtgewicht der Zusammensetzung, beträgt.

Feinteilige Ag-Cluster auf Trägern sind weitgehend farblos oder grau und darüber hinaus stabil gegenüber der Einwirkung von Laugen. Um möglichst helle (bzw. farbneutrale) Zusammensetzungen zu erhalten, sollten die Silberpartikel kleiner als 2 µm sein. Die Bildung von Silberpartikeln dieser Größe wird durch den Einsatz der erfindungsgemäßen Zinksilikat-Träger begünstigt. Die Partikelgröße des kolloidalen Silbers kann in an sich bekannter Weise, beispielsweise durch entsprechende Wahl der Silberkonzentration der Imprägnierlösung und/oder durch Wahl der Zersetzungstemperatur, wobei hohe Silberkonzentrationen und/oder hohe Zersetzungstemperaturen die Bildung größerer Silberpartikel begünstigen, eingestellt werden. Zur Verstärkung der antibiotischen Wirkung kann neben Silber ein weiteres Element (beispielsweise Palladium) mitverwendet werden.

Die erfindungsgemäßen Zusammensetzungen können als feinteilige Pulver in an sich bekannter Weise, gegebenenfalls mit einem Dispergierhilfsmittel, in Kunststoffe, insbesondere in Kunststoffasern, eingearbeitet werden und behalten dort ihre bakterizide und fungizide Wirkung. Gegenstand der vorliegenden Erfindung ist somit auch die Verwendung der erfindungsgemäßen Zusammensetzungen als Zusatzstoffe zur Ausrüstung von Kunststoffen oder Kunststoffasern gegen das Wachstum von Mikroorganismen an ihrer Oberfläche.

Gegenstand der vorliegenden Erfindung sind auch diese Zusatzstoffe enthaltende antibiotische Kunststoff-Zusammensetzungen, enthaltend
a) 0,05 bis 80 Gew.-% der erfindungsgemäßen, Silber auf einem Zinksilikat-Träger enthaltenden Zusammensetzungen als Komponente A und
b) 20 bis 99,95 Gew.-% eines Harzes, ausgewählt aus der Gruppe bestehend aus Polyethylen, Polypropylen, Polyvinylchlorid, ABS-Harz, Polyestern, Polyamiden, Polystyrol, Polyacetalen, Polyvinylalkohol, Polycarbonat, Acrylharzen, Fluorkunststoffen, Polyurethanen, Phenolharzen, Harnstoffharzen, Melaminharzen, ungesättigten Polyesterharzen, Epoxyharzen, Reyon, Kupferammonium-Reyon, Acetalen, Triacetaten, Vinyliden und natürlichem oder synthetischem Gummi als Komponente B.

Die genannten Kunststoff-Zusammensetzungen können in an sich bekannter Weise zu Kunststoff-Formteilen, Textil- oder Teppichfasern verarbeitet werden. Bevorzugt sind solche der oben genannten antibiotischen Kunststoff-Zusammensetzungen, welche die Form von Kunststoff-Formteilen, Textil- oder Teppichfasern aufweisen.

Die Erfindung wird durch die nachstehenden Beispiele näher erläutert.

### Beispiele:

### Mischung 1

In einem 6-l-Rührbehälter wurden unter ständigem Rühren (100 Upm) in 3,0 l vollentsalztes und 65°C warmes Wasser 48,37 g pulverförmiges Natronwasserglas mit einem SiO₂-Gehalt von 62,1 Gew.-% und einem Na₂O-Gehalt von 19,0 Gew.-% (Fa. Riedel-de Haen, D - 30918 Seelze) gegeben, wobei eine Suspension A mit 0,5 Mol SiO₂ und 0,3 Mol Na erhalten wurde. Anschließend wurde eine wäßrige Lösung B aus 72,16 g NaOH (entspricht 1,8 Mol Na) in 0,2 l vollentsalztem Wasser hergestellt. Außerdem wurden 318,7 g Zn(NO₃)₂ · 6H₂O (Zn-Gehalt = 98 %) in 1,5 l vollentsalztem Wasser gelöst, wobei eine Lösung C mit 1,05 Mol Zn und 2,1 Mol NO₃⁻ erhalten wurde. Daraufhin wurde die Lösung B in die 65°C warme Suspension A gegeben, wobei nach ca. 5 Minuten eine klare Lösung D erhalten wurde. In die erhaltene Lösung D wurde anschließend die Lösung C gegeben. Dabei ergab sich eine weiße Suspension E mit einem Zn-Gehalt von 1,05 Mol, einem Si-Gehalt von 0,5 Mol, einem Na-Gehalt von 2,1 Mol und einem NO₃⁻-Gehalt von 2,1 Mol. Die Suspension E wurde bei 65°C 2 Stunden lang unter Rühren (100 Upm) erhitzt und anschließend auf Raumtemperatur abgekühlt. Es wurde nach Abkühlung ein End-pH-Wert von 6,6 gemessen. Der angefallene weiße Niederschlag wurde abfiltriert und mit vollentsalztem Wasser Na-frei gewaschen. Der erhaltene Filterkuchen wurde bei 80°C in einem Trockenschrank getrocknet.

Das getrocknete weiße Pulver wurde unter Anwendung von Cu-Kα₁-Strahlung (λ = 1,5406 Å) im 2θ-Bereich von 10 bis 90° röntgenographisch untersucht, wobei sich ein Röntgenpulverdiagramm (die Intensität A der gebeugten Röntgenstrahlung aufgetragen als Funktion des zweifachen Beugungswinkels (2θ)) ergab, das die Herstellung von überwiegenden Mengen des erfindungsgemäßen röntgenamorphen Zinksilikats neben einer geringen Menge an kristallinem ZnO (Karteikarte 5-0664 der JCPDS-ICDD-Kartei (1995) für kristallines ZnO) anzeigte. Das Pulver-Röntgenbeugungsdiagramm wurde mit Hilfe eines speziellen Software-Paketes (DIFFRAC-AT V 3.2/PROFILE, Pearson-VII-Gestaltsfunktion, Version von 1994, Fa. Siemens) unter der Randbedingung einer minimalen mittleren quadratischen Abweichung in eine Superposition von separat aufgelösten Beugungsreflexen entfaltet, wobei zum einen die Reflexe des als Nebenbestandteil vorhandenen ZnO und zum anderen die breiten Reflexe des erfindungsgemäßen röntgenamorphen Zinksilikats berücksichtigt wurden. Die Ausmessung des so entfalteten Pulver-Röntgenbeugungsdiagramms des erfindungsgemäßen röntgenamorphen Zinksilikats führte zu Intensitätsmaxima bei 2θ = 31° ± 5° und bei 2θ = 61° ± 7°. Das Material hat die Zusammensetzung (Zn₄Si₂O₇(OH)₂ · H₂O). Die nach BET bestimmte spezifische Oberfläche des erhaltenen Pulvers betrug 124,0 m²/g. Der mittlere Teilchendurchmesser der Pulverpartikel beträgt 15,2 µm.

0,054 g Ag₂O wurden in 1,06 g NH₄OH 25 % gelöst und anschließend mit dest. Wasser auf eine Gesamtlösung von 77 ml aufgefüllt. Die hergestellte Tränklösung wurde auf 50 g des Trägers gegeben und die Mischung 30 Minuten gut verknetet. Das so hergestellte Material wurde bei 120°C über 16 Stunden im Trockenschrank getrocknet und nach Zerkleinerung in der Analysenmühle im Trockenschrank bei 250°C über 2 Stunden kalziniert. Das erhaltene Material weist einen Silbergehalt von 0,1 Gew.-% auf. Die Größe der Ag-Partikel liegt zwischen 10 nm und 75 nm.

### Mischung 2

Die im Beispiel 1 erhaltene Suspension E wurde 24 Stunden lang bei 65°C unter Rühren (100 Upm) erhitzt und anschließend auf Raumtemperatur abgekühlt. Es wurde nach Abkühlung ein End-pH-Wert von 6,6 gemessen. Der angefallene weiße Niederschlag wurde abfiltriert und mit vollentsalztem Wasser Na-frei gewaschen. Der erhaltene Filterkuchen wurde bei 80°C in einem Trockenschrank getrocknet.

Das getrocknete weiße Pulver wurde röntgenographisch untersucht, wobei sich ein Röntgenpulverdiagramm ergab, das dem der Karteikarte 5-0555 der JCPDS-ICDD-Kartei (1995) voll entsprach und damit die Herstellung von kristallinem Hemimorphit (Zn₄Si₂O₇(OH)₂ · H₂O) anzeigte. Die nach BET bestimmte spezifische Oberfläche des erhaltenen Pulvers betrug 81,2 m²/g. Der mittlere Teilchendurchmesser der Pulverpartikel beträgt 12,0 µm.

0,065 g Ag₂O wurden in 1,27 g NH₄OH 25 % gelöst und anschließend mit dest. Wasser auf eine Gesamtlösung von 104 ml aufgefüllt. Die hergestellte Tränklösung wurde auf 60 g des Trägers gegeben und 30 Minuten gut verknetet. Das so hergestellte Material wurde bei 120°C über 16 Stunden im Trockenschrank getrocknet und nach Zerkleinerung in der Analysenmühle im Trockenschrank bei 250°C über 2 Stunden kalziniert. Das erhaltene Material weißt einen Silbergehalt von 0,1 Gew.-% auf Der Größe der Ag-Partikel liegt zwischen 5 nm und 120 nm.

Die Prüfung der bakteriziden und fungiziden Wirkung erfolgte nach der AATCC-Test-Methode 147-1988. Es wurde die Grenzkonzentration in einer Agar-Platte ermittelt, bei der das Wachstum der Bakterien Klebsiella pneumoniae und Staphylococcus aureus bzw. der Pilze Cladosporium herbarum und Alternaria alternata unterdrückt wird.

### Beispiel 1

### Prüfkeim Klebsiella pneumoniae

- -: = kein Wachstum
- +: = leichtes Wachstum
- ++: = Wachstum

| Mischung | Konzentration in ppm | | | | |
|---|---|---|---|---|---|
| | 50000 | 10000 | 5000 | 1000 | 500 |
| 1 | - | - | - | + | ++ |
| 2 | - | ++ | ++ | ++ | ++ |

### Beispiel 2

### Prüfkeim Staphylococcus aureus

- -: = kein Wachstum
- +: = leichtes Wachstum
- ++: = Wachstum

| Mischung | Konzentration in ppm | | | | |
|---|---|---|---|---|---|
| | 50000 | 10000 | 5000 | 1000 | 500 |
| 1 | - | - | - | - | - |
| 2 | - | + | ++ | ++ | ++ |

### Beispiel 3

### Prüfkeim Cladosporium herbarum

- -: = kein Wachstum
- +: = leichtes Wachstum
- ++: = Wachstum

| Mischung | Konzentration in ppm | | | | |
|---|---|---|---|---|---|
| | 50000 | 10000 | 5000 | 1000 | 500 |
| 1 | - | - | - | ++ | ++ |
| 2 | - | ++ | ++ | ++ | ++ |

## Patentansprüche

1. Zusammensetzung, enthaltend Silber auf einem Zinksilikat-Träger der allgemeinen Formel (I)
ZnₐSi_{c}O_{a+2c-0,5e} (OH)ₑ · fH₂O (I)
mit
e = 0 - (2a + 4c),
a/c = 1 - 3,5,
f/a = 0 - 25.

2. Zusammensetzung nach Anspruch 1, dadurch gekennzeichnet, daß der Zinksilikat-Träger röntgenamorph ist.

3. Zusammensetzung nach Anspruch 1, dadurch gekennzeichnet, daß der Zinksilikat-Träger kristalliner Hemimorphit der allgemeinen Formel (II)
Zn₄Si₂O₇(OH)_{2-2y}O_{y} · xH₂O (II)
mit
x = 0 - 1,
y = 0 - 1
ist.

4. Zusammensetzung nach einem der Ansprüche 1 bis 3, dadurch gekennzeichnet, daß sie 0,01 - 10 Gew.-% Silber, bezogen auf das Gesamtgewicht der Zusammensetzung, auf dem Träger enthält.

5. Zusammensetzung nach einem der Ansprüche 1 bis 4, dadurch gekennzeichnet, daß sie kolloidales Silber mit einem mittleren Teilchendurchmesser der Silberpartikel von 1 nm bis 1000 nm enthält.

6. Zusammensetzung nach einem der Ansprüche 1 bis 5 mit bakteriziden und/oder füngiziden Eigenschaften.

7. Verfahren zur Herstellung der Zusammensetzung nach Anspruch 2
- durch Umsetzung einer waßrigen Suspension eines Alkali- oder Erdalkalisilikats mit einer wäßrigen Lösung eines Zinksalzes in den durch die allgemeine Formel (I) definierten Mengenverhältnissen bei einer Temperatur von 20°C bis zum Siedepunkt der sich ergebenden wäßrigen Suspension und einem pH-Wert von 4 bis 9,5 während einer Verweilzeit, bei der noch nicht in erheblichem Maße Kristallisation des Zinksilikats eintritt, Abtrennung des Zinksilikats, gegebenenfalls Waschen und Trocknen des Zinksilikats als Schritt a);
- Imprägnieren des Zinksilikats mit einem Silbersalz oder Silberkomplex, gefolgt von thermischer Zersetzung bei einer Temperatur oberhalb 200°C
oder
Imprägnieren des Zinksilikats mit einem Silbersalz oder Silberkomplex, gefolgt von chemischer Reduktion mit Wasserstoff oder einer reduzierenden organischen Verbindung
oder
Abscheiden des Silikats durch chemische Reduktion aus einer ein lösliches Silbersalz oder einen löslichen Silberkomplex enthaltenden Lösung auf dem Träger
oder
Aufdampfen des Silbers im Vakuum auf den Träger
als Schritt b).

8. Verfahren zur Herstellung der Zusammensetzung nach Anspruch 3
- durch Bereitstellen von natürlich vorkommendem kristallinem Hemimorphit
oder
durch Umsetzung einer wäßrigen Suspension eines Alkali- oder Erdalkalisilikats mit einer wäßrigen Lösung eines Zinksalzes, wobei das Atomverhältnis Zn/Si circa 2 beträgt, bei Normaldruck und bei einer Temperatur von 50°C bis zum Siedepunkt der sich ergebenden wäßrigen Suspension oder unter hydrothermalen Bedingungen bei einer Temperatur vom Siedepunkt der sich ergebenden wäßrigen Suspension bis 250°C und einem pH-Wert von 4 bis 9,5 während einer Verweilzeit, bei der in erheblichem Maße Kristallisation des Zinksilikats eintritt, Abtrennung des kristallinen Hemimorphits, gegebenenfalls Waschen und Trocknen sowie gegebenenfalls thermische Nachbehandlung des kristallinen Hemimorphits bei 70 bis 600°C
als Schrift a);
- Imprägnieren des Zinksilikats mit einem Silbersalz oder Silberkomplex, gefolgt von thermischer Zersetzung bei einer Temperatur oberhalb 200°C
oder
Imprägnieren des Zinksilikats mit einem Silbersalz oder Silberkomplex, gefolgt von chemischer Reduktion mit Wasserstoff oder einer reduzierenden organischen Verbindung
oder
Abscheiden des Silikats durch chemische Reduktion aus einer ein lösliches Silbersalz oder einen löslichen Silberkomplex enthaltenden Lösung auf dem Träger
oder
Aufdampfen des Silbers im Vakuum auf den Träger
als Schrift b).

9. Verwendung der Zusammensetzung gemäß einem der Ansprüche 1 bis 6 als Zusatzstoff zur Ausrüstung von Kunststoffen oder Kunststoffasern gegen das Wachstum von Mikroorganismen an ihrer Oberfläche.

10. Antibiotische Kunststoff-Zusammensetzung, enthaltend
a) 0,05 bis 80 Gew.-% der Zusammensetzung nach einem der Ansprüche 1 bis 6 als Komponente A,
b) 20 bis 99,95 Gew.-% eines Harzes, ausgewählt aus der Gruppe bestehend aus Polyethylen, Polypropylen, Polyvinylchlorid, ABS-Harz, Polyestern, Polyamiden, Polystyrol, Polyacetalen, Polyvinylalkohol, Polycarbonat, Acrylharzen, Fluorkunststoffen, Polyurethanen, Phenolharzen, Harnstoffharzen, Melaminharzen, ungesättigten Polyesterharzen, Epoxyharzen, Reyon, Kupferammonium-Reyon, Acetalen, Triacetaten, Vinyliden, natürlichem oder synthetischem Gummi als Komponente B,
wobei die Summe aus den Komponenten A und B 100 Gew.-% ergibt.

11. Antibiotische Kunststoff-Zusammensetzung nach Anspruch 10 in der Form von Kunststoff-Formteilen und Textil- oder Teppichfasern.
